# EUROPEAN PATENT SPECIFICATION

(11) **EP 1 470 902 B1**
(45) Date of publication and mention of the grant of the patent: **04.06.2008**
(21) Application number: 03734851.3
(22) Date of filing: 27.01.2003
(51) Int. Cl.: B27K 3/34, B27N 3/00, B27D 5/00, B27K 3/15, B27D 1/04

(54) **METHOD OF IMPROVING QUALITY OF LIGNEOUS LAMINATE**
VERFAHREN ZUR VERBESSERUNG DER QUALITÄT VON HOLZLAMINAT
AMELIORATION QUALITATIVE D'UN STRATIFIE LIGNEUX

(30) Priority: 28.01.2002 JP 2002018303
(43) Date of publication of application: 27.10.2004
(73) Proprietor: Miyagi Construction Co., Ltd., Kuji-shi, Iwate 028-0023 (JP)
(72) Inventor: MIYAGI, Masaaki, c/o MIYAGI CONSTRUCTION CO., LTD., Kuji-shi, Iwate 028-0023 (JP)
(74) Representative: Henkel, Feiler & Hänzel
(86) International application number: PCT/JP2003/000749
(87) International publication number: WO 2003/064127

(56) References cited:
- EP-A- 1 060 852
- WO-A-99/23130
- JP-A- 8 090 520
- JP-A- 11 048 216
- JP-A- 62 055 103
- PATENT ABSTRACTS OF JAPAN vol. 015, no. 279 (M-1136), 16 July 1991 (1991-07-16) & JP 03 097559 A (NODA CORP), 23 April 1991 (1991-04-23)

## Description

The present invention relates to a method of improving the quality of a ligneous laminate which can be applied to various uses.

### Background Art

To make an outer wall H of a typical single-family house as shown in Fig. 1, plasterboards or precast concrete boards have increased in use, and wooden boards have decreased. A front door D shown in Fig. 2 has a cast-iron frame with panes therein, and such a style has been the majority of front doors. A window frame W shown in Fig. 3 is an aluminum sash, which is used for making most of window frames. In this way, the utility of wood decreases so as to decrease the utility of sugis and hinokis planted in forests in our country. Especially, the utility of the thinnings thereof has extremely decreased.

Therefore, it is considered that a ligneous laminate constructed by superposing and bonding two or more ligneous boards together with adhesive agent is applied to the outer wall board, etc. in order to extend the industrial use of the domestic sugis, hinokis, their thinnings, etc.

A method of laminating woody fiberboards is disclosed in EP-A-1 060 852.

At the conventional step of making the ligneous board, every ligneous board is impregnated with a synthetic polyurethane resin primer, or the synthetic polyurethane resin primer is applied to every ligneous board, and then the ligneous board is dried, because the ligneous laminate needs the high bending strength, the immersing-proof nature, and the weatherability as much as those of the outer wall board made of the plasterboard or the precast concrete, the iron front door, and the aluminum sash. Furthermore, after the step of finishing the ligneous laminate in shape by a processing cutter, the impregnation of the shape-finished ligneous laminate with the synthetic polyurethane resin primer or the application of the synthetic polyurethane resin primer to the shape-finished ligneous laminate, and the subsequent drying of the shape-finished ligneous laminate are repeated. The dried product is impregnated or applied thereto with any of an urethane resin, a melamine resin, a polyester resin, a lacquer, etc., thereby being further enhanced in strength and water-repellency so that the product has the bending strength, the immersing-proof nature, and the weatherability equal to those of the above materials like the plasterboard.

However, there is a problem that this conventional method of improving the quality needs many processes before completing the product, thereby increasing the burden to be imposed on the workers due to the complicated operation and lengthening the production time. Moreover, reduction in material and production costs is further necessary to spread the ligneous laminate to take the place of the plasterboard.

Therefore, an object of the present invention is to provide a method of improving the quality of a ligneous laminate such that a shape-finished ligneous laminate is sufficiently impregnated with a synthetic polyurethane resin primer and dried so as to obtain the bending strength, the resistance to soakage, and the weatherability equal to or higher than those of the above materials like the plasterboard while the number of processes is reduced by omitting the process of the conventional method that every ligneous board is impregnated with the synthetic polyurethane resin primer and then dried. Additionally, another object of the present invention is to provide a method of improving the quality of a ligneous laminate at a production cost reduced by reusing a solvent recovered in a solvent recovery process to serve as the solvent of the synthetic polyurethane resin primer again.

### Disclosure of the Invention

According to the present invention, a method of improving the quality of a ligneous laminate comprising superposed ligneous boards by impregnation with a synthetic polyurethane resin primer, comprises forming the ligneous laminate into a product shape so as to make a shape-finished ligneous laminate (A); impregnating the shape-finished ligneous laminate (A) with the synthetic polyurethane resin primer under a pressure as high as 98.1·10⁻³ to 490.3·10⁻³Pa (1 to 5 kg/cm²) for 15 to 60 minutes according to the thickness of the shape-finished ligneous laminate (A) so as to sufficiently spread the synthetic polyurethane resin primer over the inside of the shape-finished ligneous laminate (A); and holding the shape-finished ligneous laminate (A) under a pressure of 80·10³ - 933·10³ Pa (600 to 700 torr) for 1 to 10 minutes so as to remove an excess of the synthetic polyurethane resin primer from a surface of the shape-finished ligneous laminate (A) for prevention of oozing.

Therefore, it is possible to omit the process that every ligneous board is impregnated with the synthetic polyurethane resin primer and then dried before superposing the ligneous boards, so that the number of processes for production is reduced and, due to the simplification of working operation, the burden to be imposed on the workers is alleviated and the operating time is shortened. In addition, an improvement in surface quality of the shape-finished ligneous laminate (A) can also be attained by oozing prevention.

Moreover, in the present invention, the ligneous board is made by bonding ligneous chips from a thinning by using an adhesive agent as a binder.

Therefore, a lumber from thinning having been used as a scrap wood or a low-grade wood like a palm having hardly been used as a wooden material can be usefully processed into small pieces. The use of such low-cost wooden materials greatly reduces material cost.

Additionally, in the present invention, hot air of 50 to 60°C is circulated at a pressure of 40·10³ - 53,3·10³ Pa (300 to 400 torr) around the shape-finished ligneous laminate (A) impregnated with the synthetic polyurethane resin primer so as to leave only the synthetic polyurethane resin primer in the shape-finished ligneous laminate (A) by vaporizing and removing only a solvent like toluene from the shape-finished ligneous laminate (A), and subsequently hot air of 40 to 60°C is circulated at the same pressure, while keeping the relative humidity at 50 to 70%, so as to conduct a reaction for strength elevation and a reaction for enhancing water repellency.

Therefore, while securing the bending strength, the resistance to soakage, and the weatherability equal to or higher than those of the material like the plasterboard, the solvent vaporized and removed from the ligneous board can be reused as the solvent of the synthetic polyurethane resin primer, thereby reducing production costs greatly.

### Brief Description of the Drawings

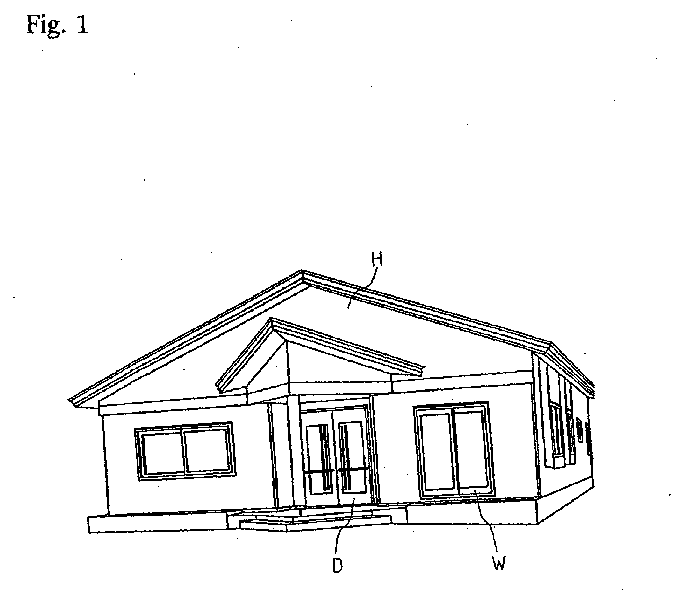

Fig. 1 is an entire perspective view of a house wherein an outer wall H, a front door D, a window frame W, etc. are constructed by ligneous laminates.

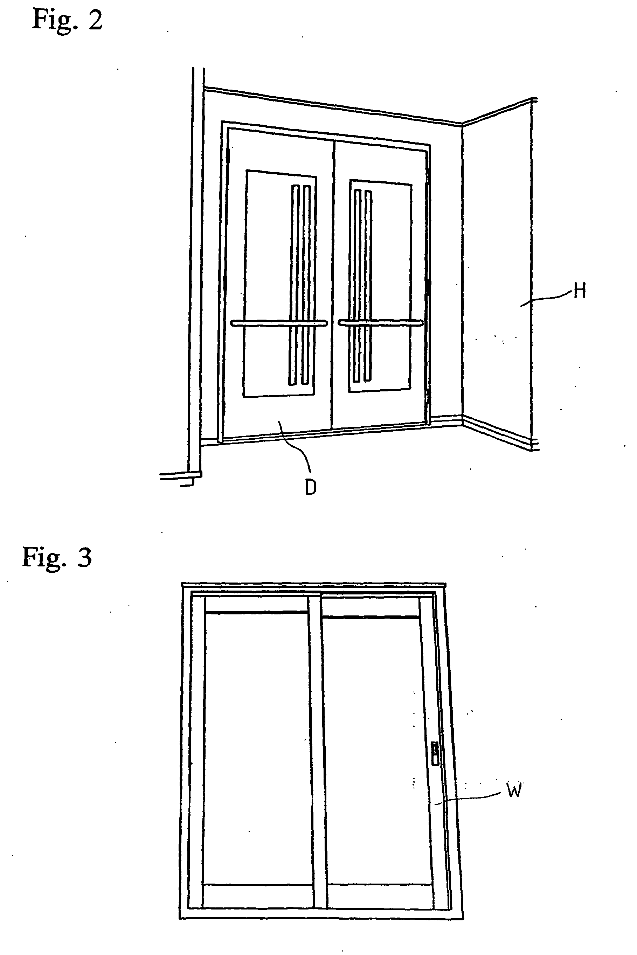

Fig. 2 is an expanded perspective view of the front door D constructed by the ligneous laminates.
Fig. 3 is an expanded perspective view of the window frame W constructed by the ligneous laminates.

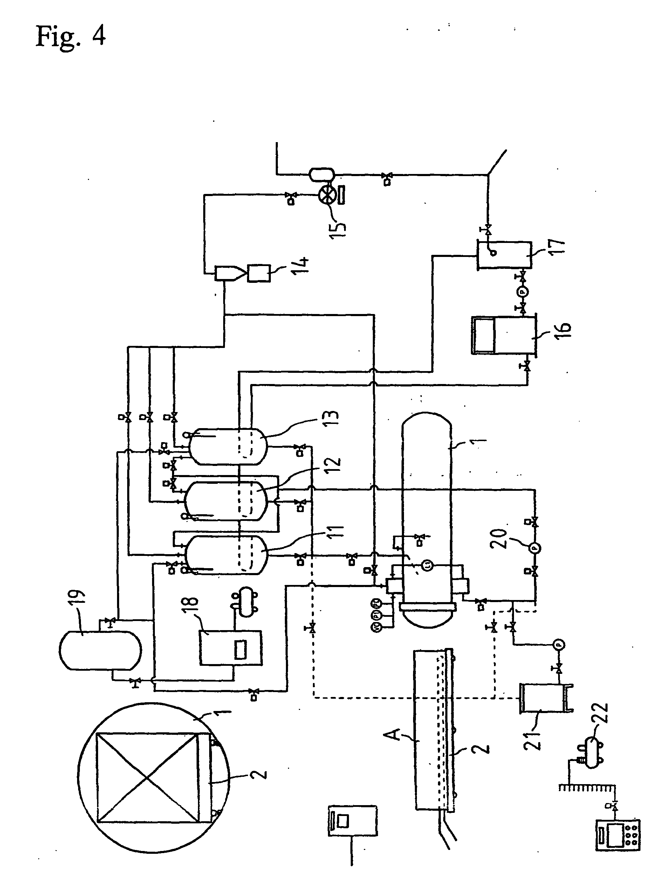

Fig. 4 is a schematic block diagram concerning an aspect as claimed in claim 1 in a plant for improving the quality of the ligneous laminate according to the present invention.

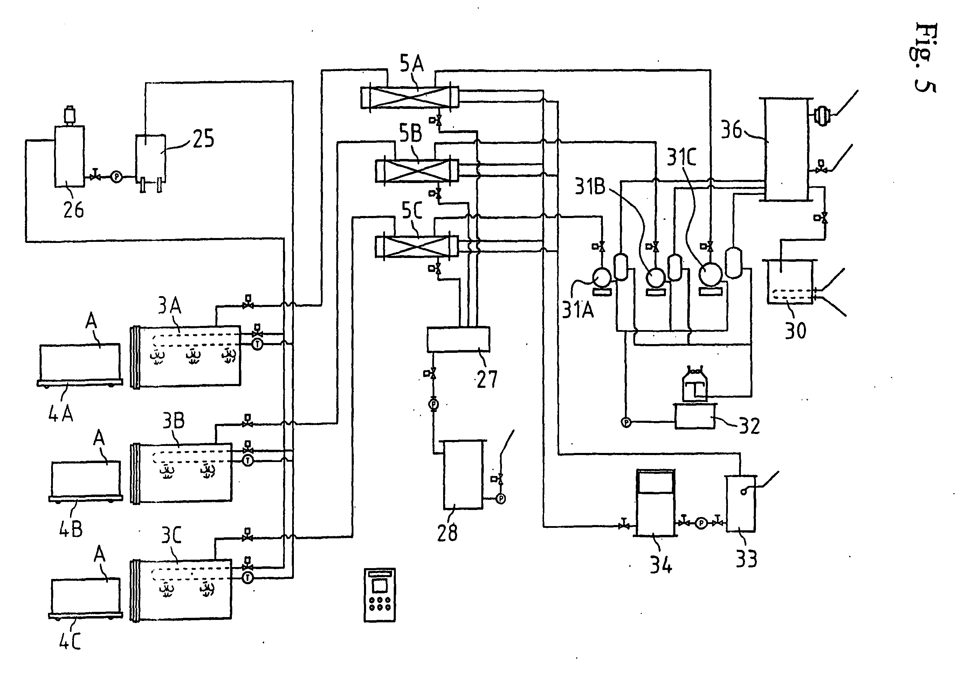

Fig. 5 is a schematic block diagram of concerning an aspect as claimed in claim 3 in a plant for improving the quality of the ligneous laminate according to the present invention.

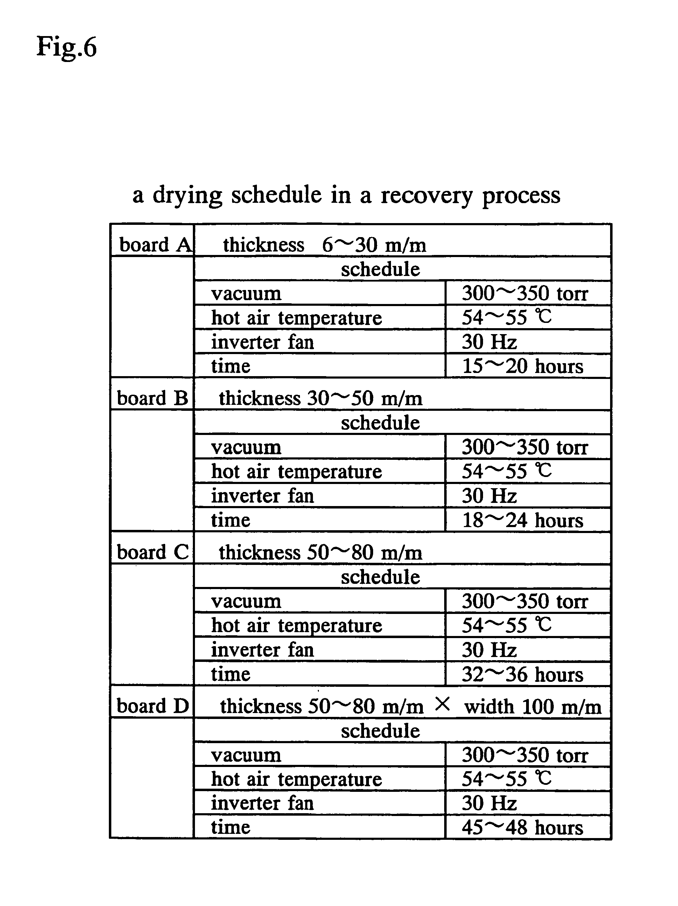

Fig. 6 is a table showing an example of a drying schedule in a recovery process of a toluene etc. as claimed in claim 3.

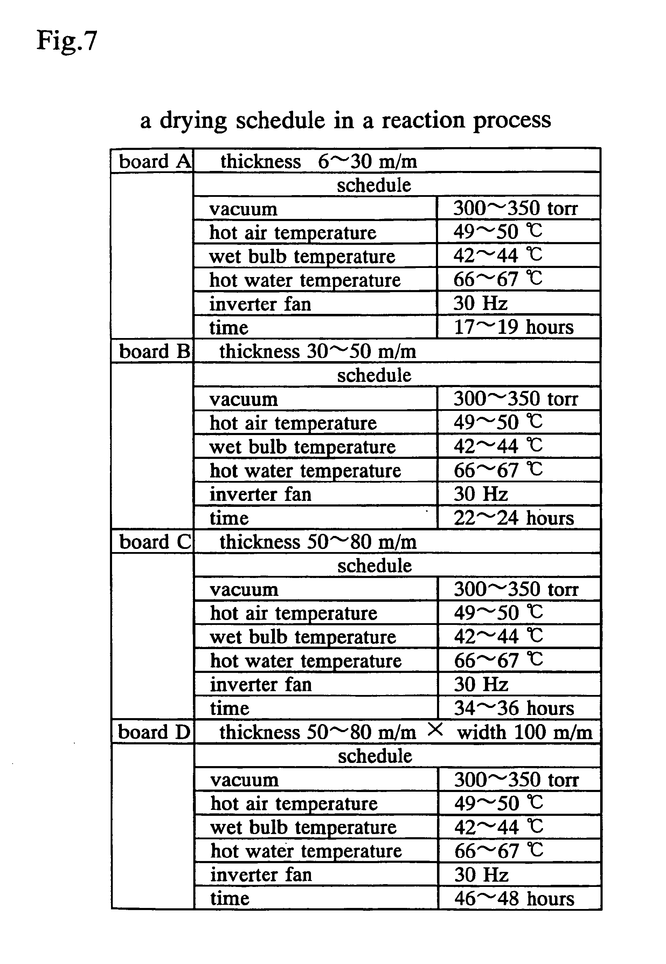

Fig. 7 is a table showing an example of a drying schedule in a reaction process after recovering a toluene etc. as claimed in claim 3.

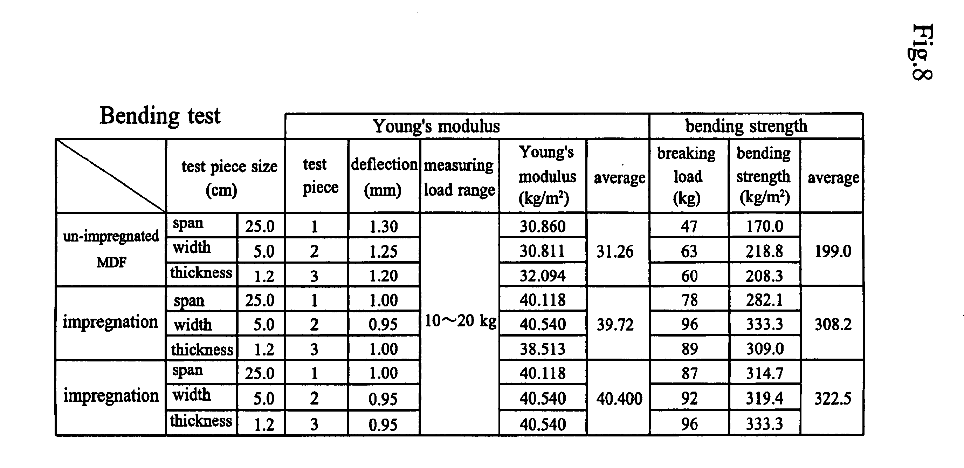

Fig. 8 is a table showing a test result of bending of a ligneous laminate processed by a method of improving the quality of the ligneous laminate according to the present invention.

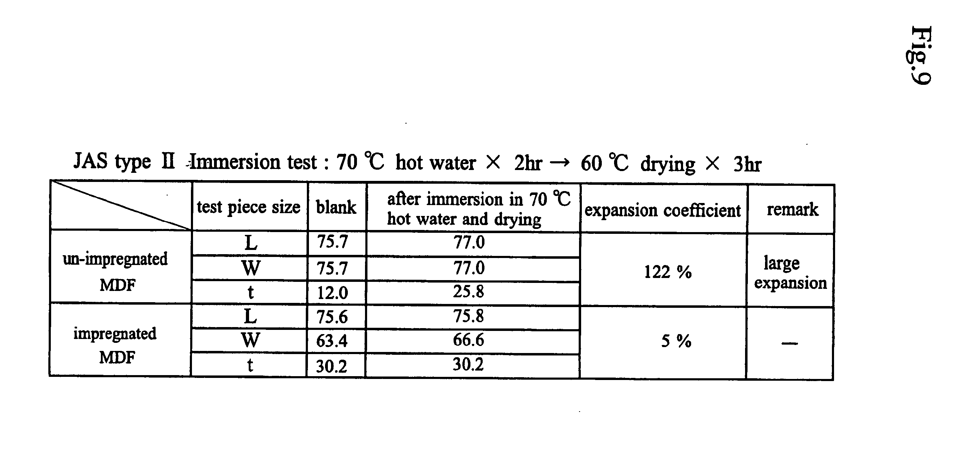

Fig. 9 is a table showing a test result of immersion of a ligneous laminate processed by a method of improving the quality of the ligneous laminate according to the present invention.

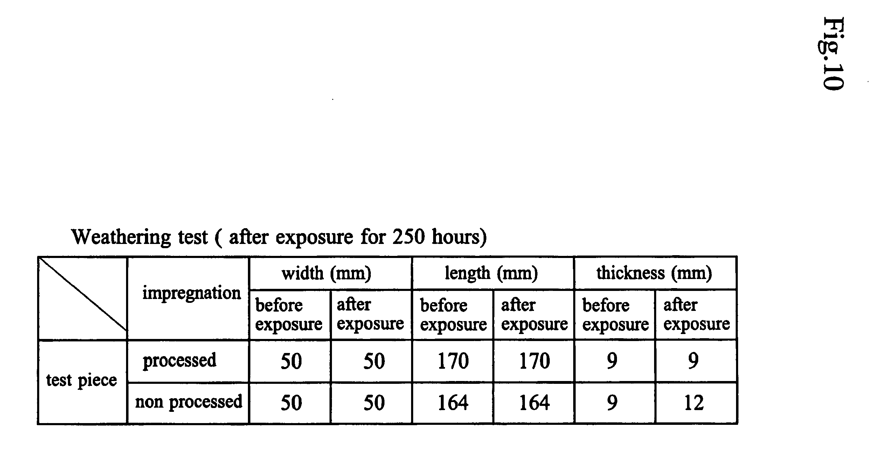

Fig. 10 is a table showing a weathering test result of a ligneous laminate processed by a method of improving the quality of the ligneous laminate according to the present invention.

### Best Mode for Carrying out the Invention

Detail description will be given of the present invention in accordance with accompanying drawings.

In this embodiment, ligneous chips which are made from thinnings or the like are bonded together by using an adhesive agent as a binder so as to be made into a ligneous board (hereinafter referred to as a "ligneous fiber board" in this embodiment). However, an ordinary simplex or complex wooden board made by cutting a lumber may be used as the ligneous board, and the ligneous board made of the ordinary wooden board can be also impregnated sufficiently with a synthetic polyurethane resin primer and dried sufficiently by use of the upgrading method of the present invention, thereby surely obtaining a required quality.

Fig. 4 shows a first processing unit according to the present invention claimed in claim 1.

The first processing unit is mainly composed of a first processing tank 1. A first in-tank truck 2 is movably provided so as to move into the first processing tank 1, and a shape-finished ligneous fiber laminate A is mounted on the first in-tank truck 2.

A first liquid tank 11, a second liquid tank 12, and a mixing tank 13 are disposed for preparing a solution of the synthetic polyurethane resin primer and supplying it to the first processing tank 1. A vacuum pump cyclone 14 and a vacuum pump 15 are connected to the first liquid tank 11, the second liquid tank 12, and the mixing tank 13. The vacuum pump 15 is also connected to the first processing tank 1.

Moreover, a cooling device 16 and a cushion tank 17 are provided for cooling solutions inside the first liquid tank 11, the second liquid tank 12, and the mixing tank 13.

A nitrogen gas producer 18 and a nitrogen gas storage tank 19 are provided in order to preclude the possibility of ignition etc. inside the tanks.

In addition, there are provided a liquid return pump 20 for returning the liquid to the first processing tank 1, a refrigeratory 21 with a refrigeration pump for refrigerating and recovering the synthetic polyurethane resin primer, a compressor 22 for evacuating the inside of the first processing tank 1, etc.

Fig. 5 is an entire schematic diagram of the second processing unit for the processing as claimed in claim 3.

The second processing unit is mainly composed of three second processing tanks 3A, 3B, and 3C. In-tank trucks 4A, 4B, and 4C are provided movable into the respective second processing tanks 3A, 3B, and 3C. The shape-finished ligneous fiber laminates A impregnated with the synthetic polyurethane resin primer are mounted on the in-tank trucks 4A, 4B, and 4C.

A steam boiler 26 for heating the inside of the second processing tanks 3A, 3B, and 3C, and a drain recovery tank 25 are disposed so as to heat each of the tanks to a predetermined temperature. Condensers 5A, 5B, and 5C are provided for recovering an excess of the synthetic polyurethane resin primer inside the shape-finished ligneous fiber laminate A, and communicated with a recovery tub 27 and a recovery tank 28 for recovering the solvent like toluene.

The condensers 5A, 5B, and 5C are communicated through other paths with respective vacuum pumps 31A, 31B, and 31C, which are communicated with a deodorizing device 36 and an aeration tank 30.

Moreover, a cooling tower 32 is connected with the vacuum pumps 31A, 31B, and 31C. A cushion tank 33 and a freezer 34 are connected with the condensers 5A, 5B, and 5C.

As above, such a system as the schematic diagram shown in Figs. 4 and 5 is constructed for the method of improving the quality of the ligneous laminate according to the present invention.

Next, description will be given of a process of immersion with the synthetic polyurethane resin primer in the first processing unit shown in Fig. 4.

The immersion process is performed according to the following procedure.

First, ligneous fiber laminates are superposed and processed into the shape-finished ligneous fiber laminate A as a product, which is not impregnated with the synthetic polyurethane resin primer or to which the synthetic polyurethane resin primer is not applied. The product is mounted on the first in-tank truck 2 of the first processing unit, and then set in the first processing tank 1.

Next, the pressure inside the first processing tank 1 is reduced to the degree of vacuum of 46.7·10³ to 53.3·10³ Pa (350 to 400 torr) by the vacuum pump 15 so as to improve the impregnation of the shape-finished ligneous fiber laminate A with the synthetic polyurethane resin primer, and the inside of the first processing tank 1 is held in the vacuum condition for any of 30 to 60 minutes corresponding to the thickness or the shape of the shape-finished ligneous fiber laminate A.

Subsequently, the synthetic polyurethane resin primer dissolved and liquefied by the solvent like toluene is supplied from the first liquid tank 11, the second liquid tank 12, and the mixing tank 13 to the inside of the first processing tank 1 so that the first in-tank truck 2 and the shape-finished ligneous fiber laminate A are immersed in the synthetic polyurethane resin primer.

Then, in this state, the internal pressure of the first processing tank 1 is increased to 98.1·10³ to 490.3·10³ Pa (1 to 5 kg/cm²) by the nitrogen gas storage tank 19 so as to impregnate the shape-finished ligneous fiber laminate A with the synthetic polyurethane resin primer under a pressure as high as 98.1·10³ to 490.3·10³ Pa (1 to 5 kg/cm²) for 15 to 60 minutes.

After impregnating, in order to prevent oozing of the primer from the surface of the shape-finished ligneous fiber laminate A, the inside of the first processing tank 1 is deaerated to a degree of vacuum of 86.7·10³ Pa (650 torr) by the vacuum pump 15 again and held for 1 to 10 minutes in this state so as to remove an excess of the synthetic polyurethane resin primer from the surface.

In this way, the characteristic method performed inside the first processing tank 1 is to adjust the pressure therein with the nitrogen gas storage tank 19 so as to decide a quantity of impregnation of the synthetic polyurethane resin primer suitable for the shape-finished ligneous fiber laminate A. Moreover, the inside of the first processing tank 1 is evacuated again after impregnating so as to remove an excess of the synthetic polyurethane resin primer from the surface of the shape-finished ligneous fiber laminate A, thereby preventing the surface of the shape-finished ligneous fiber laminate A from oozing with the primer, i.e., improving the surface quality of the product.

Next, description will be given of a process of drying the synthetic polyurethane resin primer in the second processing unit shown in Fig. 5.

The shape-finished ligneous fiber laminates A impregnated with the synthetic polyurethane resin primer inside the first processing tank 1 of the first processing unit are transferred onto the in-tank trucks 4A, 4B, and 4C for the second processing tanks 3A, 3B, and 3C of the second processing unit, and then set inside the second processing tanks 3A, 3B, and 3C which are different from the tanks for the immersion process with the synthetic polyurethane resin primer. Inside the second processing tanks 3A, 3B, and 3C, the pressure is reduced to the degree of vacuum of 40·10³-46.7·10³ Pa (300 to 350) torr) by the vacuum pumps 31A, 31B, and 31C, and then hot air of 50 to 60°C is circulated therein by steam from the steam boiler 26.

Hot air of 50 to 60°C is circulated inside the tanks under the degree of vacuum of 40·10³-46.7·10³ Pa (300 to 350 torr) so as to leave only the synthetic polyurethane resin primer permeated in the shape-finished ligneous fiber laminate A and vaporizing only a solvent like toluene.

The vaporized solvent like toluene is condensed in the condensers 5A, 5B, and 5C in a line which are disposed between the second processing tanks 3A, 3B, and 3C and the vacuum pumps 31A, 31B, and 31C, and then recovered by the recovery tank 28 for any of 15 to 60 hours corresponding to the thickness of the material. Subsequently, in the same tank, hot air of 45 to 55°C is circulated under the degree of vacuum of 40·10³-46.7·10³ Pa (300 to 350 torr) around the shape-finished ligneous fiber laminate A wherein only the synthetic polyurethane resin primer is left, thereby keeping the relative humidity inside the tank at 60 to 70% so as to progress a hardening reaction of the synthetic polyurethane resin primer.

The hardening process is carried out for any of 17 to 60 hours corresponding to the thickness of the shaped-finished ligneous fiber laminate A so that the synthetic polyurethane resin primer left in the whole shape-finished ligneous fiber laminate A reacts so as to be enhanced in strength and water repellency.

Fig. 6 shows an example of a drying schedule in a recovery process of a toluene etc. in the second processing unit, the drying schedule applying to the shape-finished ligneous fiber laminates A impregnated with the synthetic polyurethane resin primer by the first processing unit. Fig. 7 shows an example of a drying schedule in a reaction process after recovering the toluene etc. in the second processing unit. Through these reaction processes, the synthetic polyurethane resin primer is hardened and fixed to the shape-finished ligneous fiber laminates A.

Fig. 8 shows a test result of bending of a ligneous fiber laminate processed by a method of improving the quality of the ligneous fiber laminate according to the present invention. Fig. 9 shows a test result of immersion of the same. Fig. 10 shows a weathering test result of the same.

Hereafter, description will be given of an example of a method of improving the quality according to the present invention.

Inside the first processing tank 1 of the first processing unit, the shape-finished ligneous fiber laminate A having a thickness of 6 to 30 mm is impregnated with the synthetic polyurethane resin primer under a sequence of a first condition of a degree of vacuum of 46.7·10³-53.3·10³ Pa (350 to 400 torr) kept for 30 minutes, a second condition of a fluid pressure as high as 2 kg/cm² kept for 15 minutes, and a final condition of a vacuum of 86.7·10³ Pa (650 torr) kept for 1 minute. Consequently, the shape-finished ligneous fiber laminate A is impregnated with the synthetic polyurethane resin primer of about 300 kg per unit volume (m³) of the shape-finished ligneous fiber laminate A by the first processing unit. Next, the shape-finished ligneous fiber laminates A impregnated with the synthetic polyurethane resin primer inside the first processing tank 1 of the first processing unit are transferred into the second processing tanks 3A, 3B, and 3C of the second processing unit so that the recovery process is performed under the condition of a degree of vacuum of 40·10³ - 46.7·10³ Pa (300 to 350 torr), at a hot air temperature of 54 to 55°C for 17 hours according to the drying schedule for recovery of solvent. Then, inside the second processing tanks 3A, 3B, and 3C, the reaction process is performed for 18 hours under the conditions of a degree of vacuum of 40·10³ - 46.7·10³ Pa (300 to 350 torr), hot air temperature of 49 to 50°C, wet bulb temperature of 42 to 43°C, and relative humidity of 66% according to a drying schedule for the reaction process.

As understood from the result of test of bending strength shown in Fig. 8, an impregnation, which is a product impregnated with the synthetic polyurethane resin primer and dried by such a method of improving the quality according to the present invention, obtains the strength about 1.5 - 2 times as large as a un-impregnated MDF, which is the shape-finished ligneous fiber laminate A before impregnation with the synthetic polyurethane resin primer.

Also, as understood from the immersion test shown in Fig. 9, the expansion coefficient of the impregnated MDF, which is the impregnation, is only 5% in comparison with the 122% expansion coefficient of the un-impregnated MDF, due to the good water repellency by the method of improving the quality according to the present invention.

Moreover, as understood from the weathering test shown in Fig. 10, while the thickness of the un-impregnated MDF is increased after exposure, the dimensional change by the exposure is not found in the impregnation remarkably enhanced in weatherability.

### Industrial Applicability of the Invention

As mentioned above, a ligneous laminate processed by the method of improving the quality according to the present invention has such an increased strength as to be used to make interior products, supplies, equipments for housing, and building materials. Additionally, it has such a good water repellency as to be applied as materials for engineering works, various exterior materials, equipments at a wet area in a building, etc.

## Claims

1. A method of improving the quality of a ligneous laminate comprising superposed ligneous boards by impregnation with a synthetic polyurethane resin primer, comprising:
forming the ligneous laminate into a product shape so as to make a shape-finished ligneous laminate (A);
impregnating the shape-finished ligneous laminate (A) with the synthetic polyurethane resin primer under a pressure as high as 98.1·10³ to 490.3·10³ Pa (1 to 5 kg/cm²) for 15 to 60 minutes according to the thickness of the shape-finished ligneous laminate (A) so as to sufficiently spread the synthetic polyurethane resin primer over the inside of the shape-finished ligneous laminate (A); and
holding the shape-finished ligneous laminate (A) under a pressure of 80·10³ - 93,3·10³ (600 to 700) torr for 1 to 10 minutes so as to remove an excess of the synthetic polyurethane resin primer from a surface of the shape-finished ligneous laminate (A) and prevent dripping of the primer from the surface.

2. A method of improving the quality of a ligneous laminate as set forth in claim 1, wherein the ligneous board is made by bonding ligneous chips from a thinning by using an adhesive agent as a binder.

3. A method of improving the quality of a ligneous laminate as set forth in claim 1 or 2, wherein hot air of 50 to 60°C is circulated at a pressure of 40·10³ - 53,3·10³ Pa (300 to 400 torr) around the shape-finished ligneous laminate (A) impregnated with the synthetic polyurethane resin primer so as to leave only the synthetic polyurethane resin primer in the shape-finished ligneous laminate (A) by vaporizing and removing only solvent like toluene from the shape-finished ligneous laminate (A), and wherein subsequently hot air of 40 to 60°C is circulated at the same pressure, while keeping the relative humidity at 50 to 70%, so as to conduct a reaction for strength elevation and a reaction for enhancing water repellency.

## Patentansprüche

1. Verfahren zur Verbesserung der Qualität eines Holzlaminats, das aufeinandergelegte Holzplatten umfasst, durch Imprägnierung mit einem synthetischen Polyurethanharzprimer, wobei das Verfahren umfasst:
Formen des Holzlaminats zu einer Produktform derart, dass ein Holzlaminat der Endform (A) gebildet wird; Imprägnieren des Holzlaminats der Endform (A) mit dem synthetischen Polyurethanharzprimer unter einem Druck der Höhe von 98,1·10³ bis 490,3·10³ Pa (1 bis 5 kg/cm²) über 15 bis 60 Minuten entsprechend der Dicke des Holzlaminats der Endform (A), um den synthetischen Polyurethanharzprimer ausreichend über das Innere des Holzlaminats der Endform (A) zu verteilen; und Halten des Holzlaminats der Endform (A) unter einem Druck von 80·10³ bis 93,3·10³ Pa (600 bis 700 Torr) über 1 bis 10 Minuten, um einen Überschuss des synthetischen Polyurethanharzprimers von der Oberfläche des Holzlaminats der Endform (A) zu entfernen und ein Abtropfen des Primers von der Oberfläche zu verhindern.

2. Verfahren zur Verbesserung der Qualität eines Holzlaminats gemäß Anspruch 1, wobei die Holzplatte durch Verkleben von Holzspänen von einem Ausdünnen unter Verwendung eines Klebemittels als Bindemittel hergestellt wird.

3. Verfahren zur Verbesserung der Qualität eines Holzlaminats gemäß Anspruch 1 oder 2, wobei heiße Luft von 50 bis 60 °C bei einem Druck von 40- 10³ bis 53,3·10³ Pa (300 bis 400 Torr) um das mit dem synthetischen Polyurethanharzprimer imprägnierte Holzlaminat der Endform (A) zirkuliert wird, damit durch Verdampfen und Entfernen von nur Lösemittel, wie Toluol, von dem Holzlaminat der Endform (A) nur der synthetische Polyurethanharzprimer in dem Holzlaminat der Endform (A) zurückbleibt, und wobei anschließend heiße Luft von 40 bis 60 °C bei dem gleichen Druck zirkuliert wird, während die relative Feuchtigkeit bei 50 bis 70 % gehalten wird, um eine Reaktion zum Erhöhen der Festigkeit und eine Reaktion zum Verstärken des Wasserabweisungsvermögens durchzuführen.

## Revendications

1. Procédé d'amélioration de la qualité d'un stratifié ligneux comprenant des planches ligneuses superposées par l'imprégnation d'un primaire en résine synthétique de polyuréthane, comprenant les étapes consistant à :
former le stratifié ligneux selon une forme de produit de sorte à réaliser un stratifié ligneux ayant une forme finie (A) ;
imprégner le stratifié ligneux ayant une forme finie (A) avec le primaire en résine synthétique de polyuréthane sous une pression élevée de 96,1 x 10³ à 490,3 × 10³ Pa (de 1 à 5 kg/cm²) pendant 15 à 60 minutes selon l'épaisseur du stratifié ligneux ayant une forme finie (A) de sorte à étendre suffisamment le primaire en résine synthétique de polyuréthane sur l'intérieur du stratifié ligneux ayant une forme finie (A) ; et
maintenir le stratifié ligneux ayant une forme finie (A) sous une pression de 80 x 10³ à 93,3 x 10³ Pa (600 à 700 torr) pendant 1 à 10 minutes de sorte à enlever un excès de primaire en résine synthétique de polyuréthane d'une surface du stratifié ligneux ayant une forme finie (A) et à empêcher que le primaire ne s'égoutte de la surface.

2. Procédé d'amélioration de la qualité d'un stratifié ligneux selon la revendication 1, dans lequel la planche ligneuse est réalisée en liant des copeaux ligneux provenant d'une coupe en utilisant un agent adhésif comme liant.

3. Procédé d'amélioration de la qualité d'un stratifié ligneux selon la revendication 1 ou 2, dans lequel de l'air chaud à une température de 50 à 60 °C est mis à circuler à une pression de 40 x 10³ à 53,3 x 10³ Pa (300 à 400 torr) autour du stratifié ligneux ayant une forme finie (A) imprégné du primaire en résine synthétique de polyuréthane de sorte à laisser seulement le primaire en résine synthétique de polyuréthane sur le stratifié ligneux ayant une forme finie (A) en vaporisant et en enlevant seulement un solvant, tel que le toluène, du stratifié ligneux ayant une forme finie (A), et dans lequel, par la suite, de l'air chaud à une température de 40 à 60°C est mis à circuler à la même pression, tout en conservant l'humidité relative de 50 à 70 %, de sorte à déclencher une réaction pour augmenter la solidité et une réaction pour améliorer l'hydrophobicité.
